# EUROPEAN PATENT SPECIFICATION

(11) **EP 4 741 172 B1**
(45) Date of publication and mention of the grant of the patent: **02.12.2026**
(21) Application number: 25167558.3
(22) Date of filing: 31.03.2025
(51) Int. Cl.: B42D 25/29, B42D 25/36, B42D 25/45, B42D 25/351, B42D 25/373, B42D 25/378, B42D 25/387, C09C 1/00, G07D 7/1205

(54) **SECURITY ELEMENT AND PIGMENTS FOR PREPARING AN OPTICALLY VARIABLE INK**
SICHERHEITSELEMENT UND PIGMENTE ZUR HERSTELLUNG EINER OPTISCH VARIABLEN TINTE
ELÉMENT DE SÉCURITÉ ET PIGMENTS POUR LA PRÉPARATION D'UNE ENCRE OPTIQUEMENT VARIABLE

(43) Date of publication of application: 13.05.2026
(73) Proprietor: Giesecke+Devrient Currency Technology GmbH, 81677 München (DE)
(72) Inventor: SCHERER, Maik Rudolf Johann, 83703 Gmund am Tegernsee (DE); MAAK, Christian, 83703 Gmund am Tegernsee (DE); RUDISCH, Tobias, 83703 Gmund am Tegernsee (DE); SAUER, Axel, 83703 Gmund am Tegernsee (DE); SCHERER, Kai Hermann, 83703 Gmund am Tegernsee (DE)
(74) Representative: Patentanwälte Geyer, Fehners & Partner mbB

(56) References cited:
- EP-B1- 1 682 723
- US-A- 5 084 351
- US-B1- 6 243 204
- US-B2- 7 608 330

## Description

The invention relates to a security element for protecting security papers, valuable documents or other valuables. The security element comprises a substantially flat substrate having a surface, and a printed layer which is applied to the surface of the substrate and comprises pigments having a color-shift generating structure. The pigments are configured to generate a colourshift effect. The invention further relates to pigments for preparing an optically variable ink.

For security purposes, valuable documents are often provided with security elements comprising a viewing-angle-dependent effect. These security elements allow for authentication of the valuable document to be verified while simultaneously increasing security against counterfeiting, as they cannot be reproduced even with the most modern copiers. Effect pigments, especially color-shift pigments, are used to create this viewing-angle-dependent effect. These optically variable color-shift pigments have a multilayer structure, conveying a different image impression to a viewer at different viewing angles, for example, displaying a different color or brightness impression depending on the viewing angle. The effect pigments can, for example, be integrated into the substrate of the valuable document or applied to a surface of the substrate, for example as an ink. In the ink, the effect pigments are contained in a binder and can therefore be easily printed.

If blue-to-red color-shift pigments are used in a security thread or in optically variable (magnetic or non-magnetic) inks, the color change, which depends on the viewing angle, appears relatively dark and is therefore difficult to detect. This results from the fact that the red shift color is usually very dark, as it is clearly overlaid by the blue color, which is visible when viewed from above in straight view normal to the surface of the substrate - this results in a lack of color purity of the blue-to-red color-shift effect.

Document EP 1 682 723 B1 discloses a security element comprising a printed layer which is applied to the surface of a substrate and comprises pigments for generating a color-shift under white light illumination.

It is, therefore, an object of the invention to provide a security element and pigments for preparing an optically variable ink, enhancing the optical effect of a valuable.

The invention is defined by the independent claims. The dependent claims relate to preferred embodiments.

The invention provides a security element for protecting security papers, valuable documents and other valuables. The security element comprises a substantially flat substrate having a surface. A plane surface defines a basic plane for the purposes of this application. The substrate can be optical transparent or semi-transparent and can be a polymer substrate or a polymer composite substrate. The polymer substrate is preferably made out of polyethylene terephthalate (PET), or out of polyethylene (PE), polypropylene (PP), polyvinyl chloride (PVC), polystyrene (PS), polyester like polycarbonate (PC), cellophane, polyactide (PLA), celluloseacetat or other common polymer types. Polymer substrates are preferred because they are resistant against external (for example physical or chemical) factors.

Onto the surface of the substrate, a printed layer is applied, which comprises pigments for generating a color-shift effect under white light illumination. Hence, the pigments exhibit an optically variable effect. The pigments have a platelet shape extending along a plane and are arranged in the printed layer with the plane generally parallel to the basic plane.

The color-shift effect provided by the pigments is a color-shift from short wavelengths to long wavelengths and preferably a blue-to-red color-shift effect. In the context of this disclosure, the term "blue-to-red color-shift" does only indicate the direction of the color-shift effect from short wavelengths to long wavelengths and does not necessarily mean that there is a starting point exactly at a blue wavelength and an ending point exactly at a red wavelength. Hence, a blue-to-red color-shift does for example although comprise a color-shift from greenish/cyan to reddish.

The pigments comprise five layers including at least one first dielectric layer and at least one second dielectric layer each as a spacer between two further layers. Therefore, the pigments comprise thin film structures which comprise individual layers having a thickness in micro- or nanometre range. The layers are preferably applied by means of physical vapour deposition (PVD) or chemical vapour deposition (CVD). The pigments including the at least five layers have a maximum thickness of 20 µm, preferably 10 µm, highly preferably 2 µm, and have preferably a symmetrical structure in its stack of layers. The pigments preferably comprise an interference layer stack comprising following layer sequence: absorber/dielectric material/reflector/dielectric material/absorber; absorber/dielectric material/magnetic reflector/dielectric material/absorber; absorber/dielectric materi-al/reflector/magnet/reflector/dielectric material/absorber.

The absorber, the reflector and/or the magnetic reflector comprise Cr, Ti, Cu, Ni, Al, Si, Ge, Ga, Fe, Co, Mn, Mg, Zn, Sn, V, Ag, or alloys thereof. The first and/or the second dielectric layer comprise MgF₂, SiO₂, TiO₂, ZnS, Al₂O₃, ZnO, ZrO₂ or Sn₂O₃. Highly preferably the first and/or the second dielectric layer comprise SiO₂.

The layer thickness of the first dielectric layer is selected such that the pigments are configured to generate a short wavelength color in reflection (preferably in a second order of interference) at a normal viewing angle to the basic plane defined by the plane surface, and the layer thickness of the second dielectric layer is selected such that the pigments are configured to generate a long wavelength color in reflection (preferably in a third order of interference) at an oblique viewing angle of 60° relative to the normal of the surface and under white light illumination. The first dielectric layer and the second dielectric layer differ in its thickness. For the purposes of this disclosure, a normal viewing angle means a viewing angle normal to a plane surface of the substrate without corrugations. The plane substrate defines a basic plane and "normal" comprises a viewing angle range from 0° +/- 8° to avoid measuring issues regarding direct reflexion.

Preferably, the short wavelength color comprises a peak of reflected light (preferably in the second order of interference) at a wavelength of 460 nm +/- 25 nm and the normal viewing angle and the long wavelength color comprises a peak of reflected light (preferably in the third order of interference) at a wavelength of 660 nm +/- 25 nm and the oblique viewing angle of 60° relative to the normal of the basic plane.

For the purposes of this disclosure, a "peak" is defined as the absolute maximum of reflection in the wavelength range of visible light. The reflection spectrum is measured by a PerkinElmer Lambda 1050+ with a TAMS-Module (Total Absolute Measurement System) as measurement device using a halogen light source as lightning for the measurement. The mentioned measurement device is a goniometric setup in which an angle of incidence (AOI) as well as a detector angle can be independently varied. As a detector, an enhanced Si sphere detector which comprises a small integrating sphere is used. In the context of this disclosure white light illumination is sunlight or D65 illumination.

In embodiments, the described layer stacks have a semi-transparent metal layer, a metallic mirror layer underneath and a dielectric layer spaced in between. Because of this layer structure only parts of the incident light spectrum are reflected, so that the reflection of white light appears colored to an observer. The perceived color depends on the angle of incidence of the light rays. Due to its multilayer structure, a color-shift structure offers the observer a different image impression at different viewing angles and, for example, shows a different color or brightness depending on the viewing angle. The interference layer stacks of this invention show a color-shift effect from a short wavelength color at a normal viewing angle to a long wavelength color at an oblique viewing angle.

For a normal incidence the constructive interference equation for a thin-film color-shift is: $2 * {d}_{k} * {n}_{k} = k * λ$

Where k ε {1, 2, 3, ...} defines the order of interference, d the thickness of the dielectric spacer layer, n the refractive index of the dielectric spacer material and λ the wavelength of the color observed under normal light incidence.

The above described optical effect of the pigments can be provided through alternatives. In a first alternative, the printed layer comprises a pigment blend comprising first pigments comprising the first dielectric layer in an interference layer stack and second pigments comprising the second interference layer in a second interference layer stack. An optimal color-shift from short a wavelength color to a long wavelength color is obtained when the first pigments and the second pigments are mixed in 1:1 mix (by weight). The second pigments usually have a thicker spacer layer and are more heavy than the first pigments. To obtain the desired 1:1 mix the printed layer is preferably printed with a pigment blend comprising approximately 60 % of the first pigments and 40 % of the second pigments. Hence, in preferred embodiments, one of the first pigments or the second pigments dominate in the pigment blend by numbers of the pigments from 60 % to 80 % of the pigment blend and the other one of the first pigments and/or the second pigments make up the rest of the pigment blend. Highly preferably, the pigments having a thinner dielectric spacer layer dominate the pigments having thicker dielectric spacer layer by numbers. Preferred proportions of the pigments in the pigment blend by numbers are 80 % first pigments and 20 % second pigments, more favourable 70 % first pigments and 30 % second pigments and most preferred 60 % first pigments and 40 % second pigments. Other compositions are although possible, like e.g. 80 % second pigments and 20 % first pigments, 70 % second pigments and 30 % first pigments or 60 % second pigments and 40 % first pigments.

In a second alternative, the printed layer comprises asymmetric pigments comprising the first interference layer and the second interference layer. These asymmetric pigments generate the short wavelength color in reflection from a first pigment side and the long wavelength color in reflection from a second pigment side opposite from the first pigment side. The asymmetric pigments preferably comprise an interference stack comprising a sequence of a lower absorber layer, a lower dielectric layer, a reflector layer, an upper dielectric layer and an upper absorber layer, wherein the first dielectric layer forms the upper dielectric layer and the second dielectric layer forms the lower dielectric layer. The asymmetric pigments can comprise more layers above the interference layer stack. Furthermore, between the first and the second interference layer stack, an intermediate layer, such as a substrate layer can be provided.

The first dielectric layer has a thickness of 280 nm +/- 25 nm and the pigments comprising the first dielectric layer comprise a peak of reflected light in the second order of interference at a wavelength of 436 nm +/- 25 nm and a viewing angle normal to the surface under the white light illumination. A pigment with this first dielectric layer itself has one major drawback: while the short wavelength color is a blue color with a high saturation at a viewing angle normal to the surface, the long wavelength color is a red color at a viewing angle of 60° to the normal to the surface which hardly visible because a large amount of the red intensity remains within the invisible IR-spectrum. Additionally, the peak in the blue spectral range still adds to the visible color at the oblique viewing angle, resulting in a low color purity and a rather violet color instead of red.

The second dielectric layer has a thickness of 490 nm +/- 20 nm and the pigments comprising the second dielectric layer comprises a peak of reflected light in the third order of interference at a wavelength of 485 nm +/- 25 nm and a viewing angle normal to the surface under the white light illumination. A pigment with this second dielectric layer itself does not show a clean blue-to-red color-shift. The color under a viewing angle normal to the surface is rather a greenish/cyan color than a blue color. Further, at a viewing angle of 60° to the normal to the surface the color is rather a yellowish/golden color than a red color. In combination with the first dielectric layer, the second dielectric layer increases the intensity in an orange/red spectral range in order to generate a more attractive reddish color at an oblique viewing angle.

Therefore, pigments including the first dielectric layer and pigments including the second dielectric layer become mixed in the above mentioned pigment blend or the asymmetric pigments. The pigment blend or the asymmetric pigments exhibit the desired blue-to-red color-shift (from short wavelengths to long wavelengths) comprising a peak of reflected light (preferably in the second order of interference) at a wavelength of 460 nm +/- 25 nm and a viewing angle normal to the surface and a peak of reflected light (preferably in the third order of interference) at a wavelength of 660 nm +/- 25 nm and a viewing angle of 60° relative to the normal of the surface. Hence, the combination of pigments including the first and the second dielectric layer results in an ideal bright and lighter blue at a viewing angle normal to the surface and a bright red at a viewing angle of 60° relative to the normal of the surface. Thus, the optical effect is improved.

The invention further provides Pigments for preparing an optically variable ink, the pigments generate a color-shift under white light illumination. The pigments include at least one first dielectric layer and at least one second dielectric layer each as a spacer between two further layers, wherein the first and second dielectric layers have different layer thicknesses. The layer thickness of the first dielectric layer is selected such that the pigments are configured to generate a short wavelength color in reflection (preferably) in a second order of interference at a viewing angle normal to the surface, and the layer thickness of the second dielectric layer is selected such that the pigments are configured to generate a long wavelength color in reflection (preferably in a third order of interference) at a viewing angle of 60° relative to the normal of the surface.

It is understood that the pigments can be modified in the same way as the pigments used in the printed layer of the security element.

In embodiments, the pigments comprise a pigment blend comprising first pigments comprising the first dielectric layer and different second pigments comprising the second dielectric layer. Preferably, one of the first pigments or the second pigments dominate in the pigment blend by 60 % to 80 % of the pigment blend and the other one of the first or second pigments make up the rest of the pigment blend by numbers.

In other embodiments, at least some of the pigments comprise the first dielectric layer (18) and the second dielectric layer (22), such that these pigments each are asymmetric pigments (28) generating the short wavelength color in reflection from a first pigment side and the long wavelength color in reflection from a second pigment side opposite from the first pigment side.

Preferably, the short wavelength color comprises a peak of reflected light (preferably in the second order of interference) at a wavelength of 460 nm +/- 25 nm and a viewing angle normal to the surface and the long wavelength color comprises a peak of reflected light (preferably in the third order of interference) at a wavelength of 660 nm +/- 25 nm and a viewing angle of 60° relative to the normal of the surface. Most preferably, the first dielectric layer and/or the second dielectric layer comprise SiO2.

In the following, embodiments of the invention are described with reference to enclosed drawings which drawings also may disclose the inventive features. These embodiments serve explanatory purposes only and should not limit the invention. If embodiments comprise a particular combination of elements or components, the description should not be constructed that all of these elements or components are essential to the invention. Other embodiments can, rather, comprise alternative elements or components, less elements or components or additional elements or components.
Fig. 1 shows a security element comprising a printed layer comprising first pigments and second pigments in sectional view;
Fig. 2A shows a first pigment in sectional view;
Fig. 2B shows a second pigment in sectional view;
Fig. 3A shows a reflection spectrum of first pigments at a viewing angle of 8° and at a viewing angle of 60°;
Fig. 3B shows a reflection spectrum of second pigments at a viewing angle of 8° and at a viewing angle of 60°;
Fig. 4 shows a reflection spectrum of a blend of first and second pigments or asymmetric pigments at a viewing angle of 8° and at a viewing angle of 60°;
Fig. 5 shows a security element comprising a printed layer comprising asymmetric pigments in sectional view; and
Fig. 6 shows an asymmetric pigment.

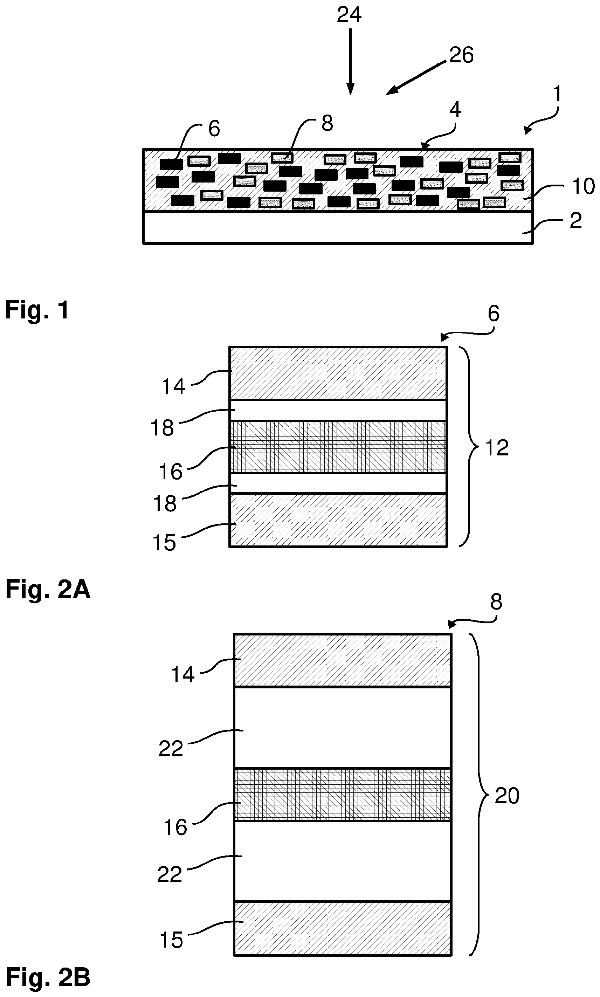

Fig. 1 shows a security element 1 in sectional view. Onto a surface of a substrate 2, a printed layer 4 is applied. The printed layer 4 comprises first pigments 6 and second pigments 8 in a binder 10. Hence, the printed layer 4 was applied to the surface of the substrate 2 as an ink.

The first pigments 6 and the second pigments 8 are both configured to generate a color-shift effect. This color-shift effect results from their thin film structure which is shown in Fig. 2A and Fig. 2B. The first pigment 6 is shown in Fig. 2A in sectional view. The first pigment 6 comprises a first interference stack 12 including five individual layers. The first interference layer stack 12 comprises a first absorber layer 14 and a reflector layer 16, spaced apart by a first dielectric layer 18. The first interference layer stack 12 further comprises a second absorber layer 15 spaced apart by the reflector layer 16 by an additional first dielectric layer 18. The second pigment 8 is shown in Fig. 2B in sectional view and comprises a second interference layer stack 20, which also comprises the first absorber layer 14 and the reflector layer 16, both spaced apart by a second dielectric layer 22. The second interference layer stack 20 further comprises the second absorber layer 15 spaced apart by the reflector layer 16 by an additional second dielectric layer 22. As it can be seen in Fig. 2A and 2B, the first interference layer stack 12 and the second interference layer stack 20 only differ in a thickness of their dielectric layers 18, 22. The second dielectric layer 22 of the second pigment 8 is much thicker than the first dielectric layer 18 of the first pigment 6. This results in a higher weight of the second pigments 8 and different optical properties. Both pigments have platelet shape and extend along a plane which runs in Fig. 2A and 2B horizontally and perpendicular to the drawing plane.

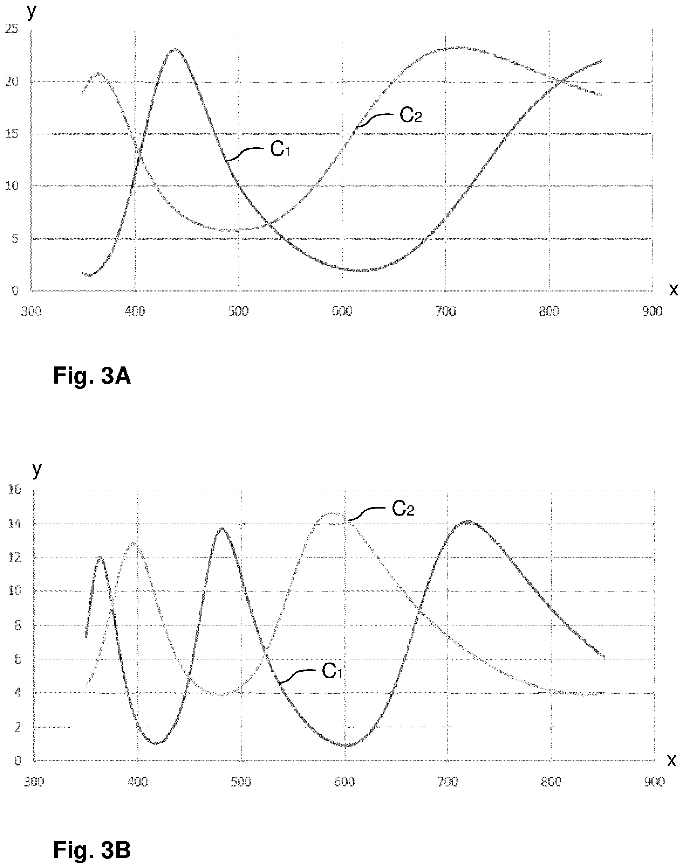

The Fig. 3A shows in a first curve c₁ a reflection spectrum of first pigments 6 at a first viewing angle 24 of 8° (normal to the surface of the substrate 2) and in a second curve c₂ a reflection spectrum of the first pigments 6 at a second viewing angle 26 of 60° to the normal of the substrate 2. Fig. 3B shows in a first curve c₁ a reflection spectrum of second pigments 8 at the first viewing angle 24 and in a second curve c₂ a reflection spectrum of second pigments 8 at the second viewing angle 26. The curves c₁, c₂ are measured by the above mentioned measurement system. The curves c₁, c₂ were measured with an angle of incidence (AOI) of 8° (first viewing angle 24) and 60° (second viewing angle 26), respectively. The corresponding detector angle were 2x AOI. No polarization filter was used. The measurements were carried out as absolute measurements, i.e. without reference standard. R = 100 % corresponds to unreflected incident light. As a detector, an enhanced Si sphere detector which comprises a small integrating sphere was used. Further, a halogen light source was used.

Looking at Fig. 3A, in case of an order of interference k = 2 and a refractive index of the first dielectric layer 18 out of SiO2 with n = 1,5 to 1,6, a blueish color with a peak in its reflection spectrum at a wavelength of approximately 436 nm under the first viewing angle 24 is obtained for the first pigments 6. The thickness of the first dielectric layer 18 is 280 nm (+/- 20nm). As it can be seen in Fig. 3A, the first pigment 6 is a second order blue-to-red Colourshift pigment and has one major drawback: While the blue color has a decent appearance with respect to the intensity at the first viewing angle 24 with a peak at approximately 436 nm, the red is hardly visible when tilting the first pigment 6 to the second viewing angle 26, with a peak at approximately 710 nm. Hence, the drawdown of the first pigment 6 is, that it only yields a dull, dark, reddish appearance under tilted observation at the second viewing angle 26. The reason herefor is that even under strongly tilted conditions a large amount of red intensity remains within a for the human eye invisible IR-spectrum.

Looking at Fig. 3B, in case of an order of interference k = 3 and a refractive index of the second dielectric layer 22 out of SiO2 with n = 1,5 to 1,6, a cyan color with a peak in its reflection spectrum at a wavelength of approximately 490 nm under the first viewing angle 24 is obtained for the second pigments 8. The thickness of the second dielectric layer 22 is within a range from 470 nm to 510 nm, which is much thicker than the thickness of the first dielectric layer 18. As is can be seen in Fig. 3B, the second pigment 8 is a third order blue-to-red color-shift pigment which yields a highly intense red/magenta color when tilting. However the second pigment 8 has two deviations from a desired blue-to-red color-shift effect: First, the color at the first viewing angle 24 is rather greenish/cyan than pure blue and second, when tilting the second pigment 8 at the second viewing angle 26, the red changes into a yellowish/golden color with a peak at approximately 600 nm.

In the printed layer 4 of Fig. 1, the first pigments 6 with its optical effect described regarding Fig. 3A and the second pigments 8 with its optical effect described in Fig. 3B are mixed, preferably 1:1 by weight. As the weight of the second pigments 8 is higher than the weight of the first pigments 6, and the mixture by weight is 1:1, the first pigments 6 dominate in a pigment blend of the printed layer 4 by making up about 60 % of the pigment blend by numbers. The blend of the first pigments 6 and the second pigments 8 in the printed layer 4 generates the desired blue-to-red color-shift effect.

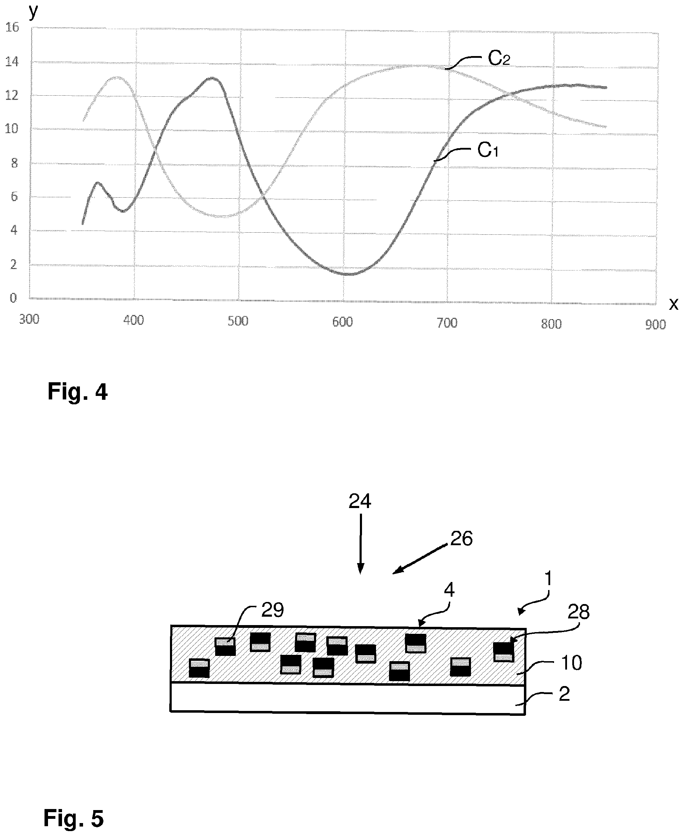

Fig. 4 shows in a first curve c₁ a reflection spectrum of the blend of the first pigments 6 and the second pigments 8 at the first viewing angle 24 and in a second curve c₂ at the second viewing angle 26. The blend comprises 60 % first pigments 6 and 40 % second pigments 8. The blend composition is chosen so that the dark blue of the (second order) first pigments 6 and the brighter greenish/cyan blue of the (third order) second pigments 8 give an ideal lighter blue at the first viewing angle 24 with a centre of the peak at 456 nm. When tilted the color of the blend gives a bright red with a centre of the peak at 660 nm. This optical effect results from mixing the (second order) first pigments 6 (dark red) and the (third order) second pigments 8 (bright magenta/red).

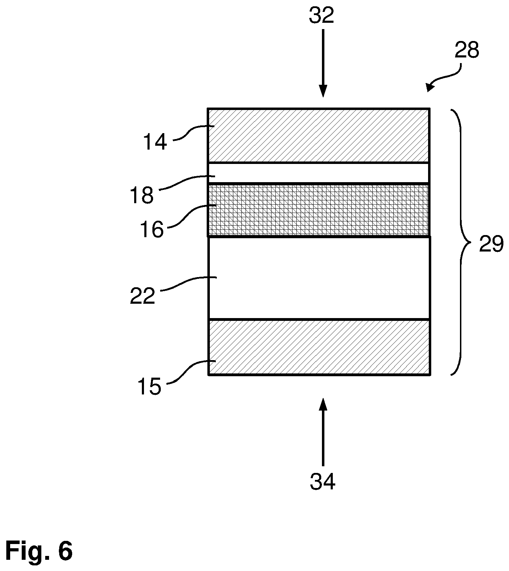

The same effect as shown in Fig. 4 can be achieved by using asymmetric pigments 28 in the printed layer 4 instead of the first pigments 6 and the second pigments 8. This configuration is shown in Fig. 5 in sectional view. The asymmetric pigments comprise an asymmetric interference layer stack 29. An Embodiment of an asymmetric pigment 28 is shown in Fig. 6 in sectional view.

As it can be seen in Fig. 6, the asymmetric pigment 28 having a first pigment side 32 and a second, opposite pigment side 34. The asymmetric interference layer stack 29 comprises the following layer sequence from the first pigment side 32 to the second pigment side 34: First absorber layer 14, first dielectric layer 18, reflector layer 16, second dielectric layer 22 and second absorber layer 15. The second dielectric layer 22 is more thick than the first dielectric layer 18 so that the interference layer stack 29 is asymmetric. The shown asymmetric pigment 28 generates the short wavelength color in reflection from the first pigment side 32 and the long wavelength color in reflection from the second pigment side 34 and therefore generate the same curves c₁, c₂ as shown in Fig. 4.

It is not explicitly shown, but the optical effect shown in Fig. 4 does also result from pigments for preparing an optically variable ink which are not embedded in a printed layer 4 of a security element 1.

### list of reference numerals

- 1: security element
- 2: substrate
- 4: printed layer
- 6: first pigment
- 8: second pigment
- 10: binder
- 12: first interference layer stack
- 14: first absorber layer
- 15: second absorber layer
- 16: reflector layer
- 18: first dielectric layer
- 20: second dielectric layer stack
- 22: second dielectric layer
- 24: first viewing angle
- 26: second viewing angle
- 28: asymmetric pigment
- 29: asymmetric interference layer stack
- 30: additional substrate
- 32: first pigment side
- 34: second pigment side

## Claims

1. A security element for protecting security papers, valuable documents or other valuables, the security element comprising:
- a substantially flat substrate (2) having a surface defining a basic plane, and
- a printed layer (4) which is applied to the surface of the substrate (2) and comprises pigments (6, 8; 28) for generating a color-shift under white light illumination, wherein
- the pigments (6, 8; 28) comprise at least one first dielectric layer (18) and at least one second dielectric layer (22) each as a spacer between two further layers (14, 16), wherein the first (18) and second dielectric layers (22) have different layer thicknesses,
- the layer thickness of the first dielectric layer (18) is selected such that the pigments (6, 8; 28) are configured to generate a short wavelength color in reflection at a normal viewing angle (24) normal to the basic plane and under white light illumination, and
- the layer thickness of the second dielectric layer (22) is selected such that the pigments (6, 8; 28) are configured to generate a long wavelength color in reflection at an oblique viewing angle (26) of 60° relative to the normal of the basic plane and under the white light illumination.

2. The security element as claimed in claim 1, wherein the printed layer (4) comprises a pigment blend, wherein the pigment blend includes first pigments (6) comprising the first dielectric layer (18) and includes second pigments (8) comprising the second dielectric layer (22).

3. The security element as claimed in claim 2, wherein each of the pigments (6, 8) of the pigment blend comprise a five layer interference stack (12, 20) comprising a sequence of lower absorber layer, lower dielectric layer, reflector layer, upper dielectric layer and upper absorber layer, wherein the first dielectric layer (18) forms the upper dielectric layer and is repeated also as the lower dielectric layer in the first pigments (6) and wherein the second dielectric layer (22) forms the upper dielectric layer and is repeated also as the lower dielectric layer in the second pigments (8).

4. The security element as claimed in claim 1, wherein at least some of the pigments comprise the first dielectric layer (18) and the second dielectric layer (22), such that these pigments each are an asymmetric pigment (28) generating the short wavelength color in reflection from a first pigment side and the long wavelength color in reflection from a second pigment side opposite to the first pigment side.

5. The security element as claimed in claim 4, wherein the at least some of the pigments comprise a five layer interference stack comprising a sequence of lower absorber layer, lower dielectric layer, reflector layer, upper dielectric layer and upper absorber layer, wherein the first dielectric layer (18) forms the upper dielectric layer and the second dielectric layer (22) forms the lower dielectric layer.

6. The security element as claimed in any of the above claims, wherein the short wavelength color comprises a peak of reflected light at a wavelength of 460 nm +/- 25 nm and at the normal viewing angle (24) and the long wavelength color comprises a peak of reflected light at a wavelength of 660 nm +/- 25 nm and at the oblique viewing angle (26).

7. The security element as claimed in any of the above claims, wherein the first dielectric layer (18) has a thickness of 280 nm +/- 25 nm and the first pigments (6) or the asymmetric pigments (28) from the first pigment side generate a peak of reflected light at a wavelength of 436 nm +/- 25 nm and at the normal viewing angle (24).

8. The security element as claimed in any of the above claims, wherein the second dielectric layer (22) has a thickness of 490 nm +/- 20 nm and the second pigments (8) or the asymmetric pigments (28) from the second pigment side generate a peak of reflected light at a wavelength of 485 nm +/- 25 nm and at the normal viewing angle (24).

9. The security element as claimed in any of the above claims, wherein the first dielectric layer (18) and/or the second dielectric layer (22) comprise SiO2.

10. The security element as claimed in any of the above claims, wherein the pigments (6, 8; 28) have a platelet shape.

11. Pigments for producing a security element, which pigments (6, 8; 28) are configured for generating a color-shift under white light illumination, wherein
- the pigments (6, 8; 28) being platelet shaped extending along a plane,
- the pigments (6, 8; 28) comprise at least one first dielectric layer (18) and at least one second dielectric layer (22) each as a spacer between two further layers (14, 16), wherein the first (18) and second dielectric layers (22) have different layer thicknesses,
- the layer thickness of the first dielectric layer (18) is selected such that the pigments (6, 8, 28) are configured to generate a short wavelength color in reflection at a normal viewing angle (24) to the plane and under white light illumination, and
- the layer thickness of the second dielectric layer (22) is selected such that the pigments (6, 8, 28) are configured to generate a long wavelength color in reflection at an oblique viewing angle (26) of 60° relative to the normal of the plane and under white light illumination.

12. The pigments as claimed in claim 11, wherein the pigments comprise a pigment blend, wherein the pigment blend includes first pigments (6) comprising the first dielectric layer (18) and includes second pigments (8) comprising the second dielectric layer (22).

13. The pigments as claimed in claim 12, wherein the first pigments dominate in the pigment blend in numbers over the second pigments, preferably by making up 60 % to 80 % of the number of pigments in the pigment blend.

14. The pigments as claimed in claim 13, wherein at least some of the pigments comprise the first dielectric layer (18) and the second dielectric layer (22), such that these pigments each are asymmetric pigments (28) generating the short wavelength color in reflection from a first pigment side and the long wavelength color in reflection from a second pigment side opposite to the first pigment side.

15. An optically variable ink for producing a security element, the ink comprising pigments according to at least one of the above claims 11 to 14.

## Patentansprüche

1. Sicherheitselement zum Schutz von Sicherheitspapieren, wertvollen Dokumenten oder anderen Wertgegenständen, wobei das Sicherheitselement umfasst:
- ein im Wesentlichen flaches Substrat (2) mit einer Oberfläche, die eine Grundebene definiert, und
- eine auf die Oberfläche des Substrats (2) aufgebrachte Druckschicht (4), die Pigmente (6, 8; 28) zur Erzeugung eines Farbwechsels bei Beleuchtung mit weißem Licht umfasst, wobei
- die Pigmente (6, 8; 28) mindestens eine erste dielektrische Schicht (18) und mindestens eine zweite dielektrische Schicht (22) umfassen, die jeweils als Abstandshalter zwischen zwei weiteren Schichten (14, 16) dienen, wobei die erste (18) und die zweite dielektrische Schicht (22) unterschiedliche Schichtdicken aufweisen,
- die Schichtdicke der ersten dielektrischen Schicht (18) so gewählt ist, dass die Pigmente (6, 8; 28) so ausgebildet sind, dass sie bei einem normalen Betrachtungswinkel (24) senkrecht zur Grundebene und unter Weißlichtbeleuchtung im Reflexionslicht eine Farbe mit kurzer Wellenlänge erzeugen, und
- die Schichtdicke der zweiten dielektrischen Schicht (22) so gewählt ist, dass die Pigmente (6, 8; 28) so ausgelegt sind, dass sie bei einem schrägen Betrachtungswinkel (26) von 60° relativ zur Normalen der Grundebene und unter Weißlichtbeleuchtung im Reflexionslicht eine langwellige Farbe erzeugen.

2. Sicherheitselement nach Anspruch 1, wobei die Druckschicht (4) eine Pigmentmischung umfasst, wobei die Pigmentmischung erste Pigmente (6), die die erste dielektrische Schicht (18) bilden, und zweite Pigmente (8), die die zweite dielektrische Schicht (22) bilden, enthält.

3. Sicherheitselement nach Anspruch 2, wobei jedes der Pigmente (6, 8) der Pigmentmischung einen fünfschichtigen Interferenzstapel (12, 20), welches eine Abfolge umfasst: eine untere Absorberschicht, eine untere dielektrische Schicht, eine Reflektorschicht, eine obere dielektrische Schicht und eine obere Absorberschicht, wobei die erste dielektrische Schicht (18) die obere dielektrische Schicht bildet und in den ersten Pigmenten (6) auch als untere dielektrische Schicht wiederholt wird und wobei die zweite dielektrische Schicht (22) die obere dielektrische Schicht bildet und in den zweiten Pigmenten (8) wiederholt wird.

4. Sicherheitselement nach Anspruch 1, wobei zumindest einige der Pigmente die erste dielektrische Schicht (18) und die zweite dielektrische Schicht (22) umfassen, so dass diese Pigmente jeweils ein asymmetrisches Pigment (28) sind, das bei Reflexion von einer ersten Pigmentseite die kurzwellige Farbe und bei Reflexion von einer zweiten, der ersten Pigmentseite gegenüberliegenden Pigmentseite die langwellige Farbe erzeugt.

5. Sicherheitselement nach Anspruch 4, wobei zumindest einige der Pigmente einen fünfschichtigen Interferenzstapel umfassen, der eine Abfolge einer unteren Absorberschicht, einer unteren dielektrischen Schicht, einer Reflektorschicht, einer oberen dielektrischen Schicht und einer oberen Absorberschicht umfasst, wobei die erste dielektrische Schicht (18) die obere dielektrische Schicht bildet und die zweite dielektrische Schicht (22) die untere dielektrische Schicht bildet.

6. Sicherheitselement nach einem der vorstehenden Ansprüche, wobei die kurzwellige Farbe einen Reflexionspeak bei einer Wellenlänge von 460 nm ± 25 nm und beim normalen Betrachtungswinkel (24) umfasst und die langwellige Farbe einen Reflexionspeak bei einer Wellenlänge von 660 nm ± 25 nm und beim schrägen Betrachtungswinkel (26) umfasst.

7. Sicherheitselement nach einem der vorstehenden Ansprüche, wobei die erste dielektrische Schicht (18) eine Dicke von 280 nm ± 25 nm aufweist und die ersten Pigmente (6) oder die asymmetrischen Pigmente (28) von der ersten Pigmentseite aus einen Reflexionspeak bei einer Wellenlänge von 436 nm ± 25 nm und beim normalen Betrachtungswinkel (24) erzeugen.

8. Sicherheitselement nach einem der vorstehenden Ansprüche, wobei die zweite dielektrische Schicht (22) eine Dicke von 490 nm ± 20 nm aufweist und die zweiten Pigmente (8) oder die asymmetrischen Pigmente (28) von der zweiten Pigmentseite bei einer Wellenlänge von 485 nm ± 25 nm und beim normalen Betrachtungswinkel (24) einen Reflexionspeak erzeugen.

9. Sicherheitselement nach einem der vorstehenden Ansprüche, wobei die erste dielektrische Schicht (18) und/oder die zweite dielektrische Schicht (22) SiO₂ umfassen.

10. Sicherheitselement nach einem der vorstehenden Ansprüche, wobei die Pigmente (6, 8; 28) eine Plättchenform aufweisen.

11. Pigmente zur Herstellung eines Sicherheitselements, wobei die Pigmente (6, 8; 28) so ausgebildet sind, dass sie unter Weißlichtbeleuchtung einen Farbwechsel erzeugen, wobei
- die Pigmente (6, 8; 28) plattenförmig sind und sich entlang einer Ebene erstrecken,
- die Pigmente (6, 8; 28) mindestens eine erste dielektrische Schicht (18) und mindestens eine zweite dielektrische Schicht (22) umfassen, die jeweils als Abstandshalter zwischen zwei weiteren Schichten (14, 16) dienen, wobei die erste (18) und die zweite dielektrische Schicht (22) unterschiedliche Schichtdicken aufweisen,
- die Schichtdicke der ersten dielektrischen Schicht (18) so gewählt ist, dass die Pigmente (6, 8, 28) so ausgelegt sind, dass sie bei einem normalen Betrachtungswinkel (24) zur Ebene und unter Weißlichtbeleuchtung im Reflexionsmodus eine Farbe mit kurzer Wellenlänge erzeugen, und
- die Schichtdicke der zweiten dielektrischen Schicht (22) so gewählt ist, dass die Pigmente (6, 8, 28) so ausgelegt sind, dass sie bei einem schrägen Betrachtungswinkel (26) von 60° relativ zur Normalen der Ebene und unter Weißlichtbeleuchtung im Reflexionslicht eine langwellige Farbe erzeugen.

12. Pigmente nach Anspruch 11, wobei die Pigmente eine Pigmentmischung umfassen, wobei die Pigmentmischung erste Pigmente (6), die die erste dielektrische Schicht (18) bilden, und zweite Pigmente (8), die die zweite dielektrische Schicht (22) bilden, enthält.

13. Pigmente nach Anspruch 12, wobei die ersten Pigmente in der Pigmentmischung zahlenmäßig gegenüber den zweiten Pigmenten überwiegen, vorzugsweise indem sie 60 % bis 80 % der Anzahl der Pigmente in der Pigmentmischung ausmachen.

14. Pigmente nach Anspruch 13, wobei zumindest einige der Pigmente die erste dielektrische Schicht (18) und die zweite dielektrische Schicht (22) umfassen, so dass diese Pigmente jeweils asymmetrische Pigmente (28) sind, die bei Reflexion von einer ersten Pigmentseite die kurzwellige Farbe und bei Reflexion von einer zweiten, der ersten Pigmentseite gegenüberliegenden Pigmentseite die langwellige Farbe erzeugen.

15. Optisch variable Tinte zur Herstellung eines Sicherheitselements, wobei die Tinte Pigmente gemäß mindestens einem der vorstehenden Ansprüche 11 bis 14 umfasst.

## Revendications

1. Élément de sécurité destiné à protéger des papiers de sécurité, des documents de valeur ou d'autres objets de valeur, ledit élément de sécurité comprenant:
- un substrat (2) sensiblement plat présentant une surface définissant un plan de base, et
- une couche imprimée (4) qui est appliquée sur la surface du substrat (2) et qui comprend des pigments (6, 8; 28) destinés à générer un changement de couleur sous un éclairage à la lumière blanche, dans lequel
- les pigments (6, 8; 28) comprennent au moins une première couche diélectrique (18) et au moins une deuxième couche diélectrique (22), chacune servant d'entretoise entre deux autres couches (14, 16), les première (18) et deuxième (22) couches diélectriques présentant des épaisseurs différentes,
- l'épaisseur de la première couche diélectrique (18) est choisie de telle sorte que les pigments (6, 8; 28) soient configurés pour produire une couleur de courte longueur d'onde en réflexion sous un angle d'observation normal (24) perpendiculaire au plan de base et sous un éclairage par lumière blanche, et
- l'épaisseur de la deuxième couche diélectrique (22) est choisie de telle sorte que les pigments (6, 8; 28) soient configurés pour générer une couleur de longue longueur d'onde en réflexion sous un angle d'observation oblique (26) de 60° par rapport à la normale au plan de base et sous un éclairage par lumière blanche.

2. Élément de sécurité selon la revendication 1, dans lequel la couche imprimée (4) comprend un mélange de pigments, ledit mélange de pigments comprenant des premiers pigments (6) constituant la première couche diélectrique (18) et des seconds pigments (8) constituant la deuxième couche diélectrique (22).

3. Élément de sécurité selon la revendication 2, dans lequel chacun des pigments (6, 8) du mélange de pigments comprend un empilement d'interférence à cinq couches (12, 20) comprenant une séquence de couche absorbante inférieure, de couche diélectrique inférieure, de couche réfléchissante, de couche diélectrique supérieure et de couche absorbante supérieure, dans lequel la première couche diélectrique (18) forme la couche diélectrique supérieure et se répète également en tant que couche diélectrique inférieure dans les premiers pigments (6), et dans lequel la deuxième couche diélectrique (22) forme la couche diélectrique supérieure et se répète également en tant que couche diélectrique inférieure dans les seconds pigments (8).

4. Élément de sécurité selon la revendication 1, dans lequel au moins certains des pigments comprennent la première couche diélectrique (18) et la deuxième couche diélectrique (22), de telle sorte que ces pigments sont chacun un pigment asymétrique (28) générant la couleur de courte longueur d'onde en réflexion depuis une première face du pigment et la couleur de longue longueur d'onde en réflexion depuis une deuxième face du pigment opposée à la première face du pigment.

5. Élément de sécurité selon la revendication 4, dans lequel au moins certains des pigments comprennent un empilement d'interférence à cinq couches comprenant une séquence de couche absorbante inférieure, de couche diélectrique inférieure, de couche réfléchissante, de couche diélectrique supérieure et de couche absorbante supérieure, dans lequel la première couche diélectrique (18) forme la couche diélectrique supérieure et la deuxième couche diélectrique (22) forme la couche diélectrique inférieure.

6. Élément de sécurité selon l'une quelconque des revendications précédentes, dans lequel la couleur à courte longueur d'onde présente un pic de lumière réfléchie à une longueur d'onde de 460 nm ± 25 nm et à l'angle d'observation normal (24), et la couleur à longue longueur d'onde présente un pic de lumière réfléchie à une longueur d'onde de 660 nm ± 25 nm et à l'angle d'observation oblique (26).

7. Élément de sécurité selon l'une quelconque des revendications précédentes, dans lequel la première couche diélectrique (18) présente une épaisseur de 280 nm ± 25 nm et les premiers pigments (6) ou les pigments asymétriques (28) du premier côté pigmentaire génèrent un pic de lumière réfléchie à une longueur d'onde de 436 nm ± 25 nm et à l'angle d'observation normal (24).

8. Élément de sécurité selon l'une quelconque des revendications précédentes, dans lequel la deuxième couche diélectrique (22) présente une épaisseur de 490 nm ± 20 nm et les deuxièmes pigments (8) ou les pigments asymétriques (28) du deuxième côté pigmentaire génèrent un pic de lumière réfléchie à une longueur d'onde de 485 nm ± 25 nm et à l'angle de vision normal (24).

9. Élément de sécurité selon l'une quelconque des revendications précédentes, dans lequel la première couche diélectrique (18) et/ou la deuxième couche diélectrique (22) comprennent du SiO₂.

10. Élément de sécurité selon l'une quelconque des revendications précédentes, dans lequel les pigments (6, 8; 28) ont une forme de plaquettes.

11. Pigments destinés à la fabrication d'un élément de sécurité, lesquels pigments (6, 8; 28) sont conçus pour générer un changement de couleur sous un éclairage à la lumière blanche, dans lesquels
- les pigments (6, 8; 28), de forme plaquettaire, s'étendent le long d'un plan,
- les pigments (6, 8; 28) comprennent au moins une première couche diélectrique (18) et au moins une deuxième couche diélectrique (22), chacune servant d'espaceur entre deux autres couches (14, 16), les première (18) et deuxième (22) couches diélectriques présentant des épaisseurs différentes,
- l'épaisseur de la première couche diélectrique (18) est choisie de telle sorte que les pigments (6, 8, 28) soient configurés pour générer une couleur de courte longueur d'onde en réflexion à un angle d'observation (24) perpendiculaire au plan et sous un éclairage par lumière blanche, et
- l'épaisseur de la deuxième couche diélectrique (22) est choisie de telle sorte que les pigments (6, 8, 28) soient configurés pour générer une couleur de longue longueur d'onde en réflexion sous un angle d'observation oblique (26) de 60° par rapport à la normale au plan et sous un éclairage par lumière blanche.

12. Pigments selon la revendication 11, dans lesquels les pigments comprennent un mélange de pigments, ledit mélange de pigments comprenant des premiers pigments (6) constituant la première couche diélectrique (18) et des seconds pigments (8) constituant la seconde couche diélectrique (22).

13. Pigments selon la revendication 12, dans lesquels les premiers pigments prédominent en nombre par rapport aux seconds pigments dans le mélange de pigments, de préférence en représentant 60 % à 80 % du nombre de pigments dans le mélange de pigments.

14. Pigments selon la revendication 13, dans lesquels au moins certains des pigments comprennent la première couche diélectrique (18) et la deuxième couche diélectrique (22), de telle sorte que ces pigments sont chacun des pigments asymétriques (28) générant la couleur à courte longueur d'onde par réflexion depuis un premier côté du pigment et la couleur à longue longueur d'onde par réflexion depuis un deuxième côté du pigment opposé au premier côté du pigment.

15. Encre optiquement variable destinée à la fabrication d'un élément de sécurité, l'encre comprenant des pigments selon au moins l'une des revendications 11 à 14 ci-dessus.
